Europäisches Patentamt

European Patent Office

Office européen des brevets

(11) Numéro de publication: **0 244 301 B1**

# FASCICULE DE BREVET EUROPEEN

(45) Date de publication de fascicule du brevet: **17.02.93**  (51) Int. Cl.5: **B01D 53/36**, C01B 17/50

(21) Numéro de dépôt: **87400899.8**

(22) Date de dépôt: **17.04.87**

(54) **Procédé pour le traitement des gaz industriels contenant des composés du soufre.**

(30) Priorité: **30.04.86 FR 8606261**

(43) Date de publication de la demande:
**04.11.87 Bulletin  87/45**

(45) Mention de la délivrance du brevet:
**17.02.93 Bulletin  93/07**

(84) Etats contractants désignés:
**AT BE CH DE ES FR GB GR IT LI LU NL SE**

(56) Documents cités:
**EP-A- 0 039 266**
**EP-A- 0 115 449**
**EP-A- 0 134 594**
**US-A- 4 082 837**

(73) Titulaire: **RHONE-POULENC CHIMIE**
**25, quai Paul Doumer**
**F-92408 Courbevoie Cédex(FR)**

(72) Inventeur: **Ouemere, Eric**
**11 bis rue du Martray**
**F-95240 Cormeilles en Parisis(FR)**

(74) Mandataire: **Dubruc, Philippe et al**
**RHONE-POULENC INTERSERVICES Service**
**Brevets Chimie 25, quai Paul-Doumer**
**F-92408 Courbevoie Cédex (FR)**

EP 0 244 301 B1

## Description

La présente invention concerne un procédé pour le traitement des gaz industriels contenant des composés du soufre.

On entend ici et dans toute la suite de la description par "traitement des composés du soufre" toute transformation catalytique de composés du soufre provenant des gaz résiduaires industriels en composés facilement éliminables.

L'invention a trait plus particulièrement à la catalyse Claus de récupération du soufre à partir de gaz résiduaires renfermant notamment de l'hydrogéne sulfuré, de l'anhydride sulfureux et eventuellement des dérivés organiques du soufre tels que $CS_2$ et COS.

Dans le procédé Claus classique la récupération du soufre à partir de gaz renfermant de l'hydrogène sulfuré et éventuellement des dérivés organiques du soufre comporte deux étapes.

Dans une première étape, on brûle l'hydrogène sulfuré en présence d'une quantité d'air réglée pour tranformer une partie du gaz en anhydride sulfureux puis, dans une deuxième étape, on fait passer le mélange gazeux obtenu dans des réacteurs en série renfermant un catalyseur sur lequel a lieu la réaction :

$$2H_2S + SO_2 \rightarrow \tfrac{3}{n} S_n + 2 H_2O \qquad (1)$$

Par ailleurs, outre l'hydrogène sulfuré, les gaz Claus peuvent contenir des composés carbonés du soufre tels que COS et $CS_2$ qui sont généralement relativement stables au niveau des convertisseurs catalytiques et qui contribuent à accroître de 20 à 50 % les émissions de $SO_2$ et de composés sulfurés dans l'atmosphére après incinération des fumées. Ces composés três gênants sont, soit déjà contenus dans le gaz à traiter, soit formés au cours de la première étape à haute température.

Ces composés peuvent être eliminés par plusieurs types de réaction en particulier par hydrolyse selon les réactions (2), (3) et/ou (4)

$$Cs_2 + 2 H_2O \rightarrow CO_2 + 2H_2S \qquad (2)$$

$$CS_2 + H_2O \rightarrow COS + H_2S \qquad (3)$$

$$COS + H_2O \rightarrow CO_2 + H_2S \qquad (4)$$

On connait divers catalyseurs et procédés de traitement de transformation catalytique de composés organiques sulfurés présents dans les gaz industriels.

C'est ainsi que l'on sait déjà depuis très longtemps que l'alumine est un catalyseur pour ce type de réaction. Toutefois l'alumine présente des performances moyennes en ce qui concerne l'élimination des dérivés organiques du soufre qui ont été mentionnés plus haut.

D'autre part plus récemment, on a utilisé comme catalyseur l'oxyde de titane qui présente une activité catalytique nettement supérieure à celle de l'alumine pour l'élimination des dérivés organiques du soufre. Cependant, cet oxyde présente une activité initiale moyenne à faible temps de contact.

L'objet de l'invention est donc un procédé de traitement catalytique de gaz industriels contenant des composés soufrés, notamment de l'hydrogène sulfuré, de l'anhydride sulfureux et éventuellement des dérivés organiques du soufre, en vue d'éliminer lesdits composés soufrés par mise en oeuvre de la réaction de CLAUS et, éventuellement, de la réaction d'hydrolyse des dérivés organiques du soufre caractérisé en ce qu'il consiste à utiliser un catalyseur comprenant de l'oxyde de zirconium.

Les catalyseurs selon l'invention pour le traitement des gaz résiduaires industriels contenant des composés du soufre peuvent se présenter selon plusieurs modes de réalisation.

Selon un premier mode de réalisation, le catalyseur est caractérisé en ce qu'il consiste en un produit massique comportant de l'oxyde de zirconium.

Selon une variante de ce premier mode, le catalyseur est caractérisé en ce qu'il comporte en outre de l'oxyde de titane et/ou de l'oxyde de cérium.

Selon un second mode, le catalyseur est caractérisé en ce qu'il comprend un support comportant de l'oxyde de zirconium et une phase supportee comportant de l'oxyde de titane.

Selon un troisième mode, le catalyseur est caractérisé en ce qu'il comprend un support comportant de l'oxyde de titane et une phase supportèe comportant de l'oxyde de zirconium.

D'autres caractéristiques et avantages de l'invention seront mieux compris à la lecture de la description qui vont suivre et des exemples concrets mais non limitatifs.

2

Comme indiqué plus haut, la caractéristique principale des catalyseurs de l'invention réside dans le fait qu'ils comprennent comme phase active de l'oxyde de zirconium.

Celui-ci peut être préparé selon tout moyen connu.

On peut mentionner d'abord les procédés par précipitation. On peut citer notamment dans ce cas une préparation par précipitation par addition d'un composé basique par exemple l'ammoniaque à une solution d'un précurseur acide du zirconium par exemple un nitrate, chlorure ou sulfate de zirconium. Cette préparation pourrait d'ailleurs être conduite en inversant l'ordre des réactifs.

On peut citer, en outre, comme autres modes préparatoires de l'oxyde de zirconium, les procédés par calcination, notamment, la calcination directe d'un précurseur du type précité par exemple dans une flamme.

On peut enfin mentionner les procédés d'obtention à partir d'un sol, en particulier la préparation par passage par un sol obtenu par hydrolyse à chaud d'une solution d'un précurseur du type précité.

Par ailleurs, cet oxyde peut se trouver présent dans les catalyseurs de l'invention soit seul, soit en mélange avec d'autres éléments et en particulier des éléments catalytiquement actifs. C'est ainsi que la quantité d'oxyde de zirconium peut varier entre 0,5 % et 100 % en poids par rapport au catalyseur fini.

Parmi les éléments catalytiquement actif, on citera tout d'abord l'oxyde de titane. Les formulations à base notamment d'oxyde de titane et d'oxyde de zirconium présentent en particulier une activité initiale élevée à faible temps de contact.

Dans le cas de ces formulations, les quantités respectives d'oxydes de titane et de zirconium peuvent varier dans de grandes proportions. A titre d'exemple uniquement on peut mentionner des formulations industrielles comprenant entre 5 et 75 % et plus particulierement 5 à 30 % en poids d'oxyde de zirconium.

Comme autre élément catalytiquement actif, on peut aussi utiliser l'oxyde de cerium. Les quantités d'oxyde de zirconium et d'oxyde de cérium pourront aussi varier dans de larges proportions notamment dans celles qui viennent d'être indiquées ci-dessus dans le cas de l'oxyde de titane.

Enfin, il est possible dans le cadre de l'invention d'utiliser une formule à base d'oxyde de zirconium, d'oxyde de cérium et d'oxyde de titane.

Par ailleurs, dans le cadre de l'invention, l'oxyde de zirconium peut être utilisé avec un ou des additifs constitués par au moins un des oxydes des éléments choisis dans le groupe constitué par le silicium, l'aluminium, l'yttrium et les terres rares.

Ces additifs ont pour but de permettre une stabilisation de la surface spécifique à haute température de l'oxyde de zirconium. Référence est faite ici à la demande de brevet français n° 85.17764 au nom de la demanderesse et dont l'enseignement est incorporé à la présente demande.

Les additifs indiqués plus haut pour la stabilisation de la surface spécifique sont employés dans des quantités qui varient généralement entre environ 1 et environ 10% en poids d'oxyde par rapport à la quantité totale oxyde de zirconium - additif, de préférence entre 2 et 5%.

Lors de la préparation du catalyseur ces additifs sont généralement introduits sous forme de précurseurs. Ainsi au titre de précurseurs d'oxyde d'aluminium, on peut citer les nitrates et les sulfates.

En ce qui concerne les précurseurs d'oxyde de silicium, on fait appel de préférence aux silicates d'ammonium quaternaire.

En ce qui concerne les terres rares et l'yttrium on peut faire appel, par exemple, aux nitrates, chlorures, sulfates, carbonates de lanthanides tels que l'yttrium, le lanthane, le cérium, le praséodyme, le néodyme, le samarium, l'europium, le gadolinium, le therbium, le disprosium, l'holmium, l'erbium, le thulium, l'ytterbium, le lutécium. Parmi ces éléments, on utilise en particulier l'yttrium, le lanthane et le cérium.

Par ailleurs, en fonction de la forme sous laquelle on désire présenter le catalyseur, il est possible de faire rentrer dans sa formulation des additifs de mise en forme. Ces additifs sont ceux utilisés classiquement dans les techniques de mise en forme. Ces additifs confèrent à la pâte obtenue par malaxage les propriétés rhéologiques adaptées à la mise en forme. A titre d'exemple d'additifs de mise en forme, on peut citer notamment : la cellulose, la carboxyméthyl-cellulose, la carboxyéthyl-cellulose, du tail-oil, les gommes xanthane, des agents tensio-actifs, des agents floculants comme les polyacrilamides, le noir de carbone, les amidons, l'acide stéarique, l'alcool polyacrylique, l'alcool polyvinylique, des biopolymères, le glucose, les polyéthylène glycol...

Enfin, la quantité de ces additifs peut varier entre 0,1 et 15 % en poids par rapport au catalyseur fini.

De plus il est possible de mettre en oeuvre des constituants complémentaires susceptibles d'améliorer les qualités mécaniques des formulations. Ces constituants pourront être choisis dans le groupe comprenant les argiles , les silicates, les sulfates d'alcalino-terreux et les fibres céramiques. Ces constituants peuvent être utilisés dans des quantités en poids par rapport au catalyseur fini pouvant aller jusqu'à 99,5 %, particulièrement jusqu'à 60 % et plus précisément jusqu'à 30 %.

3

Les catalyseurs selon l'invention peuvent être préparés selon tout procédé connu approprié pour obtenir soit un produit massique soit un produit comprenant une phase active supportée.

Les produits massiques pourront ainsi être obtenus par mise en forme d'un mélange contenant les constituants du catalyseur.

On effectue un malaxage d'un mélange à base d'eau, de poudre contenant de l'oxyde ou de l'oxyde hydraté de zirconium et d'autres additifs du type mentionné ci-dessus le cas échéant, avec éventuellement des agents de mise en forme et les oxydes ou les oxydes hydratés des autres éléments catalytiquement actifs.

On entend ici et pour toute la description par oxydes hydratés les composés de formule $MO_x (OH)_y$, z $H_2O$ M étant Zr, Ti ou Ce.

Le mélange ainsi obtenu est ensuite mis en forme. La mise en forme peut conduire à des produits de forme variée par exemple spherique, cylindrique, à des extrudes de formes pleines ou creuses en particulier à profil cylindrique, trilobé, quadrilobé ou multilobé ; a des produits sous forme de pastilles de billes, de boulettes, de granulés de monolithes et plus particulierement sous forme de nid d'abeille etc... de dimensions variées. Ils peuvent notamment être obtenus avec une machine à pastiller, en granulateur tournant, une machine de moulage par extrusion, une machine à former des boulettes ou une combinaison d'une machine de moulage par extrusion avec un granulateur tournant.

Comme forme particulière avantageuse on peut citer les produits extrudés pleins ou creux à profil cylindrique, multilobés tels que, par exemple, tri ou quadrilobés, en nid d'abeilles.

Dans une dernière étape, les produits ainsi obtenus sont séchés éventuellement puis calcinés.

On pourra ainsi préparer selon ce procédé notamment les produits massiques à base d'oxyde de zirconium seul, à base d'oxyde de zirconium et des additifs stabilisant de la surface spécifique ainsi que les produits mixtes ou ternaires à base d'oxydes de zirconium, de titane et de cérium avec éventuellement les additifs ci-dessus.

Un autre mode de préparation pourra être utilisé pour l'obtention de catalyseurs supportés notamment pour les catalyseurs comprenant un support à base d'oxyde de titane avec l'oxyde de zirconium comme phase supportée ou bien inversement avec un support à base d'oxyde de zirconium et d'oxyde de titane comme phase supportée. Bien entendu dans chacun de ces cas, le catalyseur peut comporter en outre de l'oxyde de cérium.

Le support peut être préparé et façonné à partir d'un mélange de poudre d'oxyde ou d'oxyde hydraté, de zirconium ou de titane, et éventuellement d'additifs de mise en forme comme cela vient d'être décrit plus haut.

Le support ainsi obtenu peut être ensuite imprégné ou enduit de manière à effectuer le dépôt de la phase supportée. L'imprégnation ou l'enduction se fait de manière connue par mise en contact du support avec une solution, un sol, un gel, comprenant des oxydes ou des précurseurs des oxydes constituant la phase active supportée.

Selon une variante du mode de préparation on pourra partir d'un support notamment en oxyde de titane que l'on enrobe par l'oxyde de zirconium ou un précurseur de celui-ci, cet enrobage étant éventuellement précédé ou suivi d'une imprégnation par de l'oxyde de zirconium ou un precurseur de celui-ci.

C'est ainsi que l'on pourra imprégner un support en oxyde de zirconium par une solution d'un précurseur d'oxyde de titane et le cas échéant d'un précurseur des additifs précités.

Enfin, il est aussi possible de préparer les catalyseurs de l'invention par coprécipitation ou cogélification des éléments constitutifs.

Enfin, il est bien entendu possible dans le cadre de l'invention de mettre en oeuvre les formulations catalytiques décrites ci-dessus sur des monolithes. Dans un tel cas, les supports utilises pourront être des monolithes métalliques ou en matière céramique ; ils pourront être plus particulièrement constitués par un ou plusieurs oxydes réfractaires, de préférence employé sous forme d'une pellicule ou d'un revêtement appliqué sur un monolithe du type précité, ledit monolithe étant de préférence sous forme d'une structure inerte et rigide en nids d'abeille comprenant des canaux ou conduits. De tels supports sont bien connus de l'homme de l'art et ont été largement décrits dans la littérature.

Les oxydes réfractaires utilisés sont notamment choisis parmi le groupe comprenant : les oxydes de magnésium, calcium, strontium, baryum, scandium, lanthanides, indium, thallium, silicium, titane, hafnium, thorium, germanium, plomb, vanadium, niobium, tantale, chrome, molybdène, tungstène et rhénium.

Les monolithes métalliques utilisés sont notamment ceux obtenus à partir d'alliages de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

4

Les monolithes en matière céramique utilisés sont notamment ceux comportant comme matière principale : la cordiérite, l'alumine, la mullite, le zirconium, la zirconmullite, le titanate de baryum, la porcelaine, l'oxyde de thorium, l'oxyde de magnesium, la stéatite, les carbones de bore ou de silicium.

La structure cellulaire en nids d'abeille peut être de forme hexagonale, tetragonale, triangulaire ou ondulée, elle doit permette le passage de gaz dans les canaux ou conduits formés lors de leur fabrication par extrusion, laminage, solidification d'éléments en forme de feuille, etc...

Exemple 1 comparatif - Catalyseur 1

Cet exemple concerne la préparation d'un catalyseur selon l'art antérieur à base d'alumine. Le catalyseur est obtenu par déshydratation rapide à 800°C d'hydrate BAYER. Le produit flashé est broyé puis aggloméré au drageoir. Les billes obtenues sont mûries à 100°C pendant 12 heures puis calcinées à 500°C pendant 4 heures. Le catalyseur obtenu présente les caractéristiques suivantes :

| - billes de diamètre | 4 mm |
|---|---|
| - SBE (surface spécifique) | 250 m2.g$^{-1}$ |
| - VPT (volume poreux total) | 0,48 cm$^3$g$^{-1}$ |

Exemple 2 comparatif - Catalyseur 2

Cet exemple concerne la préparation d'un catalyseur selon l'art antérieur à base d'oxyde de titane. A une suspension d'oxyde de titane obtenue après hydrolyse et filtration dans le procédé classique d'attaque sulfurique de l'ilménite, on ajoute une suspension de chaux afin de neutraliser la totalité des sulfates. La suspension est séchée à 150°C pendant 1 heure. La poudre obtenue est malaxée pendant 2 heures en présence d'eau et d'acide nitrique dans les proportions suivantes :

| - poudre $TiO_2$ | 58% |
|---|---|
| - $HNO_3$ | 2% |
| - $H_2O$ | 40% |

Le mélange est ensuite extrudé au travers d'une filière de 3,2mm. Les extrudés sont séches à 120°C pendant 15 heures puis calcinés à 450°C pendant 2 heures.

Les caractérisations du catalyseur obtenu sont les suivantes :

| - extrudés de diamètre | 3mm |
|---|---|
| - SBE | 120 m2.g$^{-1}$ |
| - VPT | 0,35 cm$^3$g$^{-1}$ |

Exemple 3 comparatif - Catalyseur 3

Cet exemple concerne la préparation d'un catalyseur selon l'art antérieur à base d'oxyde de titane sur un support en silice.

On prépare ce catalyseur en ajoutant goutte à goutte du $TiCl_4$ (38,85 g) à 150 ml d'eau à une température de 10°C. 146 ml de la solution ainsi obtenue sont utilisés pour imprégner 128,4 g de billes de silice. Les billes imprégnées sont ensuite séchées pendant 2 heures à 120°C, la température des billes séchées étant augmentée de 500°C à la vitesse de 100°C/heure. On maintient la température à 500°C pendant deux heures puis on laisse les billes revenir à la température ambiante.

Le catalyseur obtenu présente les caractéristiques suivantes :

| | |
|---|---|
| Rapport atomique Ti/Si | 0,10 |
| SBE | 280 m$^2$g$^{-1}$ |
| VPT | 0,82 cm$^3$g$^{-1}$. |

### Exemple 4 comparatif - Catalyseur 4

Cet exemple concerne la préparation d'un catalyseur selon l'art antérieur à base d'oxyde de zirconium sur un support en silice. On imprègne 90,7 g de billes de silice du même type que dans l'exemple 3 avec 92,5 ml d'une solution aqueuse de nitrate de zirconium contenant 20,8 g de ce sel. Les billes sont ensuite traitées de la même manière que dans l'exemple 3.

Le catalyseur obtenu présente les caractéristiques suivantes :

| | |
|---|---|
| Rapport atomique Zr/Si | 0,05 |
| SBE | 250 m2/g |
| VPT | 0,74 cm$^3$ g$^{-1}$. |

### Exemple 5 - Catalyseur 5

Cet exemple concerne la préparation d'un catalyseur massique selon l'invention à base d'oxyde de titane et d'oxyde de zirconium. A une suspension d'oxyde de titane obtenue après hydrolyse et filtration dans le procédé classique d'attaque sulfurique de l'ilmenite, on ajoute une suspension de chaux afin de neutraliser la totalité des sulfates. La suspension est séchée à 150°C pendant 1 heure. La poudre obtenue est comalaxée, pendant 2 heures, en présence d'eau et d'acide nitrique avec une poudre d'oxyde hydraté de zirconium, obtenue par traitement à la soude puis lavage à l'acide nitrique et à l'eau du sulfate basique de zirconium, dans les proportions suivantes :

| | |
|---|---|
| - oxyde hydraté de titane | 56% |
| - oxyde hydraté de zirconium | 18% |
| - HNO$_3$ | 3% |
| - H$_2$O | 23%. |

Le mélange est ensuite extrudé au travers d'une filière de 0 3,2 mm.Les extrudés sont séchés à 120°C pendant 15 heures puis calcinés à 450°C pendant 2 heures.

Les caractéristiques du catalyseur obtenu sont les suivantes :

| | |
|---|---|
| - extrudés de diamètre | 3mm |
| - SBE | 119 m2.g$^{-1}$ |
| - VPT | 0,29 cm$^3$g$^{-1}$ |

Composition en poids :
TiO$_2$ = 75%
ZrO$_2$ = 25%

### Exemple 6 - Catalyseur 6

Cet exemple concerne la préparation d'un catalyseur massique selon l'invention à base d'oxyde de zirconium. La poudre d' oxyde hydraté de zirconium utilisée dans l'exemple 5 est malaxée pendant 1 heure en présence d'eau et d'acide nitrique dans les proportions suivantes :

| - poudre | 75% |
|---|---|
| - $HNO_3$ | 10% |
| - $H_2O$ | 15% |

Les extrudés sont séchés à 120°C pendant 15 heures puis calcinés à 400°C pendant 3 heures. Le catalyseur obtenu présente les caractéristiques suivantes :

| - extrudés de diamètre | 3mm |
|---|---|
| - SBE | 90 m2.$g^{-1}$ |
| - VFT | 0.33 $cm^3g^{-1}$. |

Exemple 7 - Catalyseur 7

Cet exemple concerne la préparation d'un catalyseur massique selon l'invention à base d'oxyde de zirconium et d'oxyde de cérium.

Une solution de nitrate céreux à 800 g/l de cérium est calcinée à 150°C pendant 24 heures. Le gâteau obtenu est co-malaxé en présence d'eau et d'acide nitrique avec une poudre d'oxyde hydraté de zirconium, obtenue par traitement à la soude puis lavage à l'acide nitrique et à l'eau du sulfate basique de zirconium, dans les proportions suivantes en poids :

| oxyde hydraté de cérium | 15 % |
|---|---|
| oxyde hydrate de zirconium | 53 % |
| $HNO_3$ | 8 % |
| $H_2O$ | 23 %. |

Le mélange est extrudé ensuite au travers d'une filière de diamètre 3,2 mm. Les extrudés sont séchés à 120°C pendant 15 heures puis calcinés à 450°C pendant 2 heures.

Les caractéristiques du catalyseur obtenu sont les suivantes :

| extrudés de diamètre | 3 mm |
|---|---|
| SBE | 98 $m^2g^{-1}$ |
| VPT | 0,28 $cm^3g^{-1}$. |

Exemple 8 - Catalyseur 8

Cet exemple concerne un catalyseur massique selon l'invention à base d'oxyde de zirconium, d'oxyde de cerium et d'oxyde de titane. A une suspension d'oxyde de titane obtenue après hydrolyse et filtration dans le procédé classique d'attaque sulfurique de l'ilménite, on ajoute une suspension de chaux afin de neutraliser la totalité des sulfates. La suspension est séchée à 150°C pendant 1 heure. La poudre obtenue est comalaxée, pendant 2 heures, en présence d'eau et d'acide nitrique à d'une part une poudre d'oxyde hydraté de zirconium obtenu par traitement à la soude puis lavage à l'acide nitrique et à l'eau du sulfate basique de zirconium et d'autre part une poudre d'oxyde hydraté de cerium obtenue comme decrit dans l'exemple 7, dans les proportions suivantes en poids :

| - oxyde hydraté de titane | 43% |
|---|---|
| - oxyde hydrate de zirconium | 16% |
| - oxyde hydrate de cerium | 10% |
| - $HNO_3$ | 8% |
| - $H_2O$ | 23% |

Le mélange est ensuite extrudé au travers d'une filière de 3,2mm de diamétre. Les extrudés sont séchés à 120°C pendant 15 heures puis calcinés à 450°C pendant 2 heures.

Les caractéristiques du catalyseur obtenu sont les suivantes :

| - extrudés de diamètre | 3mm |
|---|---|
| - SBE | 112 $m^2.g^{-1}$ |
| - VPT | 0,29 $cm3g^{-1}$ |

Exemple 9 - Test catalytique

Le test catalytique a pour but de comparer les activités en conversion CLAUS et en élimination du $CS_2$ de différents catalyseurs dans les conditions suivantes :

| - composition volumique du gaz | $H_2S$ | 6 % |
|---|---|---|
| | $SO_2$ | 4 % |
| | $cs_2$ | 1 % |
| | COS | 0,5% |
| | $H_2O$ | 30 % |
| | $N_2$ | 58,5% |
| - VVH = 900 $h^{-1}$ | | |
| - température entrée réacteur | 225°C | |
| - température sortie réacteur | 340°C. | |

Les gaz de sortie sont analysés par chromatographie en phase gazeuse.

Dans les tableaux 1 et 2 figurent les résultats obtenus avant et, pour certains catalyseurs, après vieillissement de 15 heures de fonctionnement dont 5 heures sous 5000VPM d'oxygène, respectivement en catalyse CLAUS et en élimination du $CS_2$. Les nombres donnés expriment le taux de conversion en %.

Tableau 1 - Résultats Catalytiques en conversion Claus à différents temps de contact pour les catalyseurs n° 1 à 8

| | Catalyseur | Temps de contact | 0,5 s | 1 s | 2 s |
|---|---|---|---|---|---|
| C O M P A R A T I F | Alumine | Catalyseur 1 | 56 | 63 | 64 |
| | | Catalyseur 1 après vieillissement | 56 | 60 | 61 |
| | TiO$_2$ | Catalyseur 2 | 60 | 62 | 62 |
| | | Catalyseur 2 après vieillissement | 59 | 60 | 62 |
| | TiO$_2$ support SiO$_2$ | Catalyseur 3 | – | 61 | 64 |
| | ZrO$_2$ support SiO$_2$ | Catalyseur 4 | – | 60 | 63 |
| I N V E N T I O N | TiO$_2$-ZrO$_2$ | Catalyseur 5 | 65 | 65 | 65 |
| | | Catalyseur 5 après vieillissement | 65 | 65 | 65 |
| | ZrO$_2$ | Catalyseur 6 | 62 | 65 | 65 |
| | | Catalyseur 6 après vieillissement | 58 | 64 | 64 |
| | ZrO$_2$-CeO$_2$ | Catalyseur 7 | 63 | 65 | 65 |
| | | Catalyseur 7 après vieillissement | 60 | 65 | 65 |
| | ZrO$_2$-CeO$_2$-TiO$_2$ | Catalyseur 8 | 63 | 65 | 65 |
| | | Catalyseur 8 après vieillissement | 60 | 65 | 65 |

<u>Tableau 2 - Résultats catalytiques en élimination du $CS_2$ à différents temps de contact pour les catalyseurs n° 1 à 8</u>

| | Catalyseur | Temps de contact | 0,5 s | 1 s | 2 s |
|---|---|---|---|---|---|
| C O M P A R A T I F | $Al_2O_3$ | Catalyseur 1 | 30 | 55 | 87 |
| | | Catalyseur 1 après vieillissement | 7 | 17 | 62 |
| | $TiO_2$ | Catalyseur 2 | 55 | 70 | 92 |
| | | Catalyseur 2 après vieillissement | 30 | 55 | 87 |
| | $TiO_2$ support $SiO_2$ | Catalyseur 3 | - | 28 | 53 |
| | $ZrO_2$ support $SiO_2$ | Catalyseur 4 | - | 23 | 42 |
| I N V E N T I O N | $TiO_2$-$ZrO_2$ | Catalyseur 5 | 68 | 97 | 100 |
| | | Catalyseur 5 après vieillissement | 70 | 96 | 100 |
| | $ZrO_2$ | Catalyseur 6 | 90 | 99 | 100 |
| | | Catalyseur 6 après vieillissement | 75 | 97 | 100 |
| | $ZrO_2$-$CeO_2$ | Catalyseur 7 | 91 | 95 | 98 |
| | | Catalyseur 7 après vieillissement | 76 | 90 | 94 |
| | $ZrO_2$-$CeO_2$-$TiO_2$ | Catalyseur 8 | 63 | 95 | 100 |
| | | Catalyseur 8 après vieillissement | 61 | 92 | 100 |

L'examen des résultats reportés dans le tableau 1 et dans le tableau 2 met bien en évidence la supériorité des catalyseurs de l'invention par rapport au catalyseur de l'art antérieur.

On notera en particulier l'activité particulièrement élevée pour un faible temps de contact des catalyseurs de l'invention en élimination/hydrolyse du $CS_2$. Des résultats identiques à ceux obtenus pour l'élimination du $CS_2$ se retrouvent d'ailleurs pour l'élimination du COS.

**Revendications**

1. Procédé de traitement catalytique de gaz industriels contenant des composés soufrés, notamment de l'hydrogène sulfuré, de l'anhydride sulfureux et éventuellement des dérivés organiques du soufre, en vue d'éliminer lesdits composés soufrés par mise en oeuvre de la réaction de CLAUS et, éventuellement, de la réaction d'hydrolyse des dérivés organiques du soufre caractérisé en ce qu'il consiste à utiliser un catalyseur comprenant de l'oxyde de zirconium.

2. Procédé selon la revendication 1, caractérisé en ce que ledit catalyseur consiste en un produit massique comportant de l'oxyde de zirconium.

3. Procédé selon la revendication 2, caractérisé en ce que ledit catalyseur comporte en outre de l'oxyde de titane et/ou de l'oxyde de cerium.

4. Porcédé selon la revendication 1, caractérisé en ce que ledit catalyseur comprend un support comportant de l'oxyde de zirconium et une phase supportée comportant de l'oxyde de titane.

5. Procédé selon la revendication 1, caractérisé en ce que ledit catalyseur comprend un support comportant de l'oxyde de titane et une phase supportée comportant de l'oxyde de zirconium.

6. Procédé selon l'une des revendications 4 ou 5, caractérisé en ce que ledit catalyseur comporte en outre de l'oxyde de cérium.

7. Procédé selon l'une des revendications 2 ou 3, caractérisé en ce que ledit catalyseur se présente sous une forme pleine ou creuse à profil cylindrique, multilobé, en nid d'abeille.

8. Procédé selon la revendication 1, caratérisé en ce que ledit catalyseur comporte une phase active comprenant de l'oxyde de zirconium et éventuellement de l'oxyde de titane et/ou de cerium et un support en monolithe.

9. Procédé selon l'une quelconque des revendications 1 à 8, caractérisé en ce que la quantité d'oxyde de zirconium varie entre 0,5 et 100% en poids par rapport au catalyseur fini.

10. Procédé selon l'une quelconque des revendications précédentes, caractérisé en ce que ledit catalyseur comporte un additif pour stabiliser la surface spécifique de l'oxyde de zirconium, cet additif étant constitué par au moins un des oxydes des éléments choisis dans le groupe constitué par le silicium, l'aluminium, l'yttrium et les terres rares.

11. Procédé selon la revendication 10, caractérisé en ce que la quantité d'additif varie entre 1 et 10% en poids par rapport à la quantité totale oxyde de zirconium - additif.

12. Procédé selon l'une quelconque des revendications précédentes, caractérisé en ce que ledit catalyseur comporte un ou plusieurs constituants complémentaires choisis dans le groupe comprenant les argiles, les silicates, les surfaces d'alcalino-terreux, les fibres céramiques.

**Claims**

1. Process for the catalytic treatment of industrial gases containing sulphur compounds, particularly hydrogen sulphide, sulphur dioxide and possibly organic sulphur compounds, with a view to the elimination of said sulphur compounds by carrying out the CLAUS reaction and possibly the hydrolysis reaction of the organic derivatives of the sulphur, characterized in that it consists of using a catalyst incorporating zirconium dioxide.

2. Process according to claim 1, characterized in that said catalyst consists of a mass product incorporating zirconium dioxide.

3. Process according to claim 2, characterized in that said catalyst also incorporates titanium dioxide and/or cerium dioxide.

4. Process according to claim 1, characterized in that said catalyst comprises a support incorporating zirconium dioxide and a supported phase incorporating titanium dioxide.

5. Process according to claim 1, characterized in that said catalyst comprises a support incorporating titanium dioxide and a supported phase incorporating zirconium dioxide.

6. Process according to one of the claims 4 or 5, characterized in that said catalyst also incorporates cerium dioxide.

7. Process according to one of the claims 2 or 3, characterized in that said catalyst is in solid or hollow form with a cylindrical, multilobed, honeycomb profile.

8. Process according to claim 1, characterized in that said catalyst has an active phase incorporating zirconium dioxide and optionally titanium dioxide and/or cerium dioxide and a monolithic support.

9. Process according to any one of the claims 1 to 8, characterized in that the zirconium dioxide quantity varies between 0.5 and 100% by weight, based on the finished catalyst.

10. Process according to any one of the preceding claims, characterized in that said catalyst incorporates an additive for stabilizing the specific surface of the zirconium dioxide, said additive being constituted by at least one of the oxides of the elements chosen from within the group constituted by silicon, aluminium, yttrium and rare earths.

11. Process according to claim 10, characterized in that the additive quantity varies between 1 and 10% by weight, based on the total quantity of zirconium dioxide and additive.

12. Process according to any one of the preceding claims, characterized in that said catalyst incorporates one or more complementary constituents chosen from within the group including clays, silicates, alkaline earth sulphates and ceramic fibres.

**Patentansprüche**

1. Verfahren zur katalytischen Behandlung von schwefelhaltige Verbindungen, insbesondere Schwefelwasserstoff, Schwefeltrioxid und gegebenenfalls organische Schwefelderivate , enthaltenden Industriegasen zur Entfernung dieser schwefelhaltigen Verbindungen durch Anwendung der Claus-Reaktion und gegebenenfalls der Hydrolysereaktion der organischen Schwefelderivate, dadurch gekennzeichnet, daß es darin besteht, einen Zirkoniumoxid umfassenden Katalysator zu verwenden.

2. Verfahren gemäß Anspruch 1, dadurch gekennzeichnet, daß der Katalysator aus einem Zirkoniumoxid enthaltenden Massenprodukt besteht.

3. Verfahren gemäß Anspruch 2, dadurch gekennzeichnet, daß der Katalysator außerdem Titanoxid und/oder Ceroxid enthält.

4. Verfahren gemäß Anspruch 1, dadurch gekennzeichnet, daß der Katalysator einen Träger umfaßt, der Zirkoniumoxid und eine Titanoxid enthaltende, auf einen Träger aufgebrachte Phase enthält.

5. Verfahren gemäß Anspruch 1, dadurch gekennzeichnet, daß der Katalysator einen Träger umfaßt, der Titanoxid und eine Zirkoniumoxid enthaltende, auf einen Träger aufgebrachte Phase enthält.

6. Verfahren gemäß einem der Ansprüche 4 oder 5, dadurch gekennzeichnet, daß der Katalysator außerdem Ceroxid enthält.

7. Verfahren gemäß einem der Ansprüche 2 oder 3, dadurch gekennzeichnet, daß der Katalysator in gefüllter oder hohler Form mit zylindrischem, mehrfach gelapptem, wabenförmigem Profil vorliegt.

8. Verfahren gemäß Anspruch 1, dadurch gekennzeichnet, daß der Katalysator eine aktive Phase enthält, die Zirkoniumoxid und gegebenenfalls Titanoxid und/oder Ceroxid und einen monolithischen Träger umfaßt.

9. Verfahren gemäß einem der Ansprüche 1 bis 8, dadurch gekennzeichnet, daß die Menge des Zirkoniumoxids zwischen 0,5 und 100 Gew.%, bezogen auf den endgültigen Katalysator, variiert.

10. Verfahren gemäß einem der vorhergehenden Ansprüche, dadurch gekennzeichnet, daß der Katalysator ein Additiv zur Stabilisierung der spezifischen Oberfläche des Zirkoniumoxids enthält, wobei dieses Additiv zumindest aus einen der Oxide der Elemente, ausgewählt unter Silicium, Aluminium, Yttrium und den Seltenen Erden, besteht.

11. Verfahren gemäß Anspruch 10, dadurch gekennzeichnet, daß die Menge des Additivs zwischen 1 und 10 Gew.%, bezogen auf die Gesamtmenge Zirkoniumoxid und Additiv, variert.

12. Verfahren gemäß einem der vorhergehenden Ansprüche, dadurch gekennzeichnet, daß der Katalysator einen oder mehrere ergänzende Bestandteile, ausgewählt unter den Tonen, den Silicaten, den Erdalkalisulfaten und den keramischen Fasern, enthält.